# EUROPEAN PATENT SPECIFICATION

(11) **EP 1 973 360 B1**
(45) Date of publication and mention of the grant of the patent: **07.12.2011**
(21) Application number: 07104750.0
(22) Date of filing: 23.03.2007
(51) Int. Cl.: H04W 8/24

(54) **Classmark Change Message System and Method**
Classmark-Änderungsmeldungssystem und -Verfahren
Système et procédé de message de changement de classe de service

(43) Date of publication of application: 24.09.2008
(73) Proprietor: RESEARCH IN MOTION LIMITED, Waterloo, Ontario N2L 3W8 (CA)
(72) Inventor: Singh, Ajay, Waterloo Ontario N2L 3W8 (CA)
(74) Representative: Howson, Richard G.B.

(56) References cited:
- WO-A-01/11911
- WO-A-02/45317
- 3GPP: "3GPP TS 44.018 v7.8.0 (2007-03) 3rd Generation Partnership Project; Technical Specification Group GSM/EDGE Radio Access Network; Mobile radio interface layer 3 specification; Radio Resource Control (RRC) protocol (Release 7)"[Online] 20 March 2007 (2007-03-20), page 32-39,79,80,144-147,243-246,324,325, XP002446831 Retrieved from the Internet: URL:http://www.3gpp.org/ftp/Specs/html-inf o/44018.htm> [retrieved on 2007-08-14]

## Description

A mobile device with wireless telecommunications capabilities, such as a mobile telephone, a personal digital assistant, a handheld computer, or a similar device, will be referred to herein as a mobile station. A mobile station typically has the capability to send a type of radio resource control message known as a classmark change message to the network with which the mobile station is in communication. A classmark change message informs the network of the capabilities and features of the mobile station. For example, several different ciphering algorithms might be available in the communication protocol that the network is using, but the mobile station might be capable of supporting only one of the algorithms and not others. The network might request information from the mobile station to determine which of the ciphering algorithms the mobile station supports. The network would then be aware that it should us a particular ciphering algorithm when communicating with the mobile station.

WO 02/45317 describes a network access system including a programmable access device having distributed service control. The programmable access device has a message interface coupled to an external processor and first and second network interfaces through which packets are communicated with a network. The device includes a packet header filter and a forwarding table that is utilised to route packets communicated between the first and second network interfaces. The packet header filter identifies messages in the series of messages upon which policy-based services are to be implemented and passes identified messages via the message interface to the external processor for processing. The external processor may invoke service control on the message and may also invoke policy control on the message.

WO 01/11911 describes a method for performing an inter-system handover of a user terminal in a telecommunications network. The user terminal stores capability data indicative of the user terminal's capabilities for communication with the service subsystems and the access subsystems.

### GENERAL

An embodiment provides a mobile station, comprising: a processor programmed to promote sending a classmark change message, which informs the network of the capabilities and features of the mobile station, responsive to receiving a command from a network, the command requiring a capability that the mobile station does not possess, wherein the network has previously sent a system information message to the mobile station with an early classmark sending control flag disabled, which indicates that the mobile station does not send a classmark change message upon accessing the network, and has not previously sent a classmark enquiry message to the mobile station.

Another embodiment provides a method in a mobile station for informing a network of the mobile station's capability, comprising: receiving a system information message with an early classmark sending control flag disabled, which indicates that the mobile station does not send a classmark change message upon accessing the network, from the network; receiving a command for performing a task that the mobile station is incapable of performing from the network; and responsive to receiving the command from the network, sending a classmark change message, which informs the network of the capabilities and features of the mobile station, to the network to inform the network of the capability of the mobile station.

Another embodiment provides a network component of a wireless network, comprising: a processor programmed such that when the wireless network has commanded a mobile station to perform a task requiring a capability that the mobile station lacks, and wherein the mobile station sends a classmark change message, which informs the network of the capabilities and features of the mobile station, responsive to receiving the command from the wireless network for the task that the mobile station lacks the capability, the processor promotes using the classmark change message received from the mobile station to send a related command to the mobile station to perform a task requiring a different capability that the mobile station does possess, wherein the wireless network previously sends a system information message to the mobile station with an early classmark sending control flag disabled, which indicates that the mobile station does not send a classmark change message upon accessing the network, and has not previously sent a classmark enquiry message to the mobile station.

Another embodiment provides a method in a wireless communication system having a mobile station and a network for informing the network of the mobile station's capability, comprising: sending a system information message with an early classmark sending control flag disabled, which indicates that the mobile station does not send a classmark change message upon accessing the network; sending a command to the mobile station to perform a task that the mobile station is incapable of performing; and sending a classmark change message, which informs the network of the capabilities and features of the mobile station, to the network from the mobile station to inform the network of the capability of the mobile station, responsive to receiving the command from the network.

The invention is defined by the independent claims 1, 6, 12, 17, 24, and 25.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a diagram of a wireless communications system including a mobile station operable for some of the various embodiments of the disclosure.

Figure 2 is a call flow diagram for a call in which a classmark change message is transmitted according to an embodiment of the disclosure.

Figure 3 is a block diagram of a mobile station operable for some of the various embodiments of the disclosure.

Figure 4 is a diagram of a software environment that may be implemented on a mobile station operable for some of the various embodiments of the disclosure.

Figure 5 is an illustrative general purpose computer system suitable for some of the various embodiments of the disclosure.

### DESCRIPTION OF PREFERRED EMBODIMENTS

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

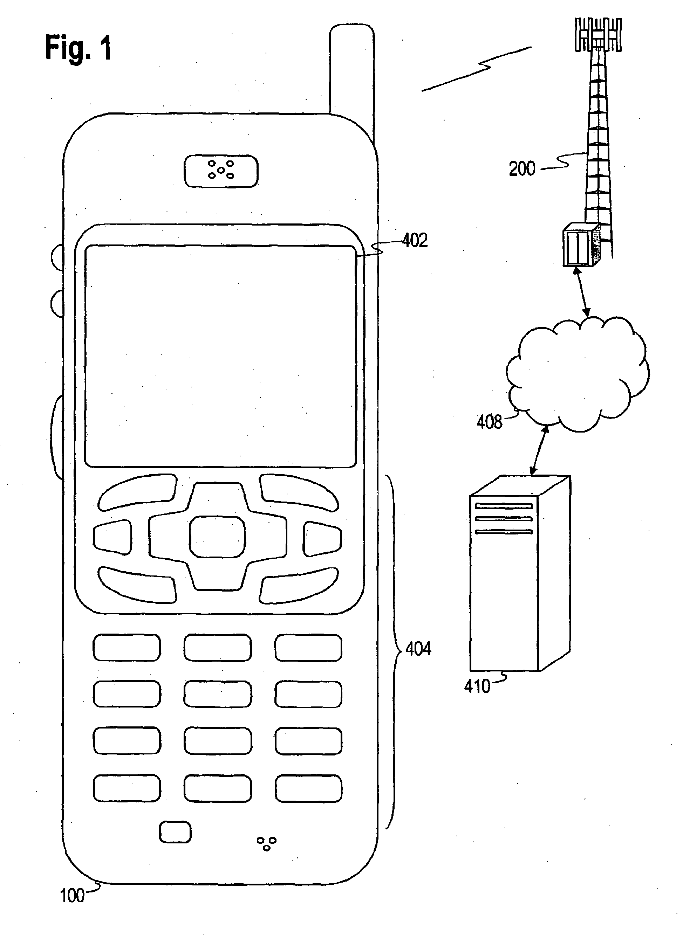

Figure 1 is a diagram of a wireless communications system including a mobile station 100 and a telecommunications network 200. The mobile station 100 might be a mobile telephone, a personal digital assistant, a handheld computer, or a similar device. The network 200 might be a GSM (Global System for Mobile Communications) network, a CDMA (Code Division Multiple Access) network, a UTRAN (UMTS (Universal Mobile Telecommunications System) Terrestrial Radio Access Network), a GERAN (GSM Edge Radio Access Network), a GAN/UMA (Generic Access Network/Unlicensed Mobile Access) network, or some other well known wireless telecommunications network. Other components in Figure 1 will be described in detail below.

When the mobile station 100 is powered on, it typically begins searching for a wireless telecommunications cell with which it can communicate. When an appropriate cell has been found, network equipment in the cell can begin sending the mobile station 100 information regarding the identity of the network 200 and the behavior expected from the mobile station 100. For example, in the GSM protocol, the mobile station 100 identifies a broadcast control channel (BCCH) through which it can receive network information. A base station in the cell and associated with the network 200 can then send a message known as a system information message or a system information message indication to the mobile station 100 via the BCCH. The system information message informs the mobile station 100 of the parameters the mobile station 100 should follow for any calls the mobile station 100 places or receives while in the cell.

A System Information Type 3 message is described in the 3GPP (3rd Generation Partnership Project) specification TS 44.018, a Packet System Information Type 2 message is described in the 3GPP specification TS 44.060, and a Generic Access Resource Control (GA-RC) Register Accept message is described in the 3GPP specification TS 44.318. One of the information elements in these and other system information messages is an early classmark sending control flag. When this flag is enabled, the mobile station 100 is requested to send a classmark change message to the network 200 as soon as possible after accessing the network 200. When this flag is disabled, the mobile station 100 does not send a classmark change message upon accessing the network 200.

When the early classmark sending control flag is disabled, the network 200 may send a classmark enquiry message to the mobile station 100 at some time after the mobile station 100 has accessed the network 200. The classmark enquiry message requests that the mobile station 100 send the network 200 a classmark change message specifying the capabilities and features of the mobile station 100. Thus, there have traditionally been two occasions on which the mobile station 100 would send a classmark change message to the network 200: upon accessing the network 200 and discovering that the early classmark sending control flag is enabled and upon receiving a classmark enquiry message from the network 200.

When the early classmark sending control flag is disabled and a classmark enquiry message has not been sent, the network 200 may not be aware of the capabilities and features of the mobile station 100. In such a case, the network 200 might send the mobile station 100 a message requesting the mobile station 100 to perform a task that the mobile station 100 is not capable of performing. For example, if the network 200 is unaware of the ciphering algorithms that the mobile station 100 supports, the network 200 might request that the mobile station 100 perform a ciphering function that the mobile station 100 cannot perform. The mobile station 100 would not be able to comply with such a request and current standards do not specify the action the mobile station 100 should take in such a situation.

In an embodiment, when the mobile station 100 receives a command from the network 200 to perform an action that the mobile station 100 is incapable of performing, the mobile station 100 sends the network 200 a classmark change message specifying its capabilities. The classmark change message might be substantially similar to the classmark change message that the mobile station 100 sends when the early classmark sending control flag is enabled or when the mobile station 100 receives a classmark enquiry message.

In an embodiment, the classmark change message that is sent is appropriate for the type of device that sends the message. For example, a third generation (3G) device might send a UTRAN classmark change message, a CDMA device might send a CDMA classmark change message, and a GERAN device might send a GERAN lu mode classmark change message. In this manner, the network 200 may then determine the capabilities of the mobile station 100.

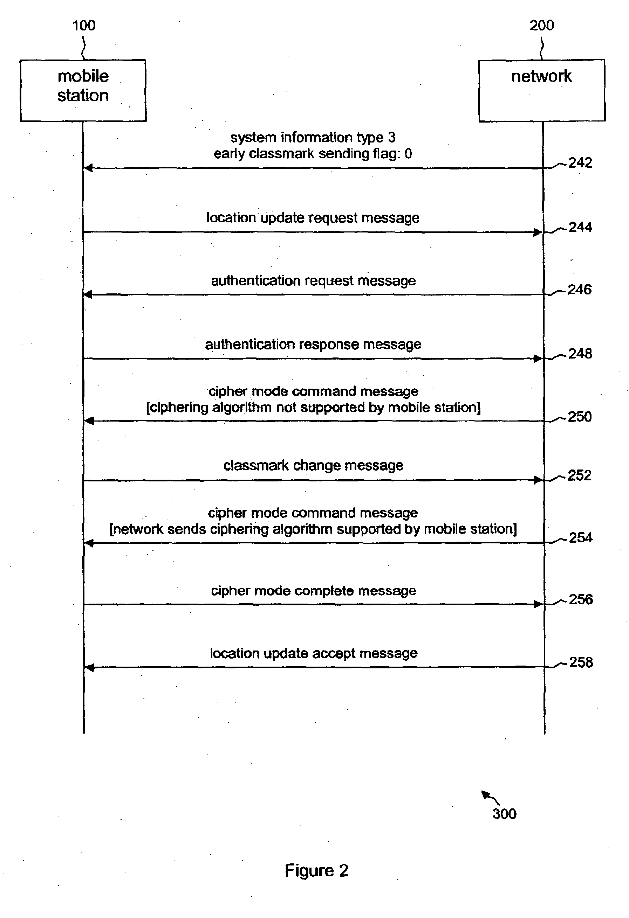

Figure 2 is a call flow diagram 300 depicting the mobile station 100 sending a classmark change message to the network 200 according to an embodiment of the disclosure. The network 200 might be a GSM network, a UTRAN network, a CDMA network, a GERAN network, a GAN/UMA network, or some other well known wireless telecommunications network.

At event 242, the network 200 sends a system information type 3 message to the mobile station 100. In other embodiments, other types of system information message could be sent. The early classmark sending control flag in the system information message is set to 0, meaning that early classmark sending is disabled. That is, the network 200 has not requested that the mobile station 100 send a classmark change message when the mobile station 100 initially accesses the network 200.

At some point after the mobile station 100 gains access to the network 200, the mobile station 100 sends a location update request message to the network 200 at event 244. In other embodiments, the mobile station 100 might send some other type of message to the network 200 at this point. At event 246, the network 200 responds with an authentication request command and the mobile station 100 replies with an authentication response message at event 248.

Upon authenticating the mobile station 100, the network 200 sends a cipher mode command message to the mobile station 100 at event 250. However, the mobile station 100, in this example, is not capable of supporting the ciphering algorithm specified by the network 200 in the cipher mode command message. Since early classmark sending was disabled and since the network 200 has not sent a classmark enquiry message to the mobile station 100, the network 200 is not aware that the mobile station 100 cannot support the specified ciphering algorithm. In other embodiments, the network 200 might send some other type of command that the mobile station 100 is not capable of carrying out.

At event 252, the mobile station 100 sends a classmark change message to the network 200 in response to the command that the mobile station 100 was incapable of following. The classmark change message specifies the capabilities and features that the mobile station 100 does possess. The network 200 is capable of receiving this classmark change message and modifying its previous command in accordance with the capabilities of the mobile station 100. In the embodiment of Figure 2, the cipher mode command message depicted at event 250 is modified such that a ciphering algorithm that is supported by the mobile station 100 is specified. The network 200 sends this modified cipher mode command message to the mobile station 100 at event 254. In other embodiments, where another type of command might be sent at event 250, the command is modified appropriately according to the capabilities that the mobile station 100 specifies in the classmark change message sent at event 252 and this modified command is sent at event 254.

At event 256, the mobile station 100 sends a cipher mode complete message to the network 200, indicating that the command received at event 254 has been completed. If a different command had been sent at event 254, a completion message appropriate for that command might be sent at event 256. At event 258, the network 200 sends the mobile station 100 a location update accept message indicating that the location update request message that was sent at event 244 has been accepted. If a different request message had been sent at event 244, the network 200 might send a different accept message at event 258.

Returning to Figure 1, a wireless communications system including one embodiment of the mobile station 100 is shown. The mobile station 100 is operable for implementing aspects of the disclosure, but the disclosure should not be limited to these implementations. Though illustrated as a mobile phone, the mobile station 100 may take various forms including a wireless handset, a pager, a personal digital assistant (PDA), a portable computer, a tablet computer, or a laptop computer. Many suitable mobile stations combine some or all of these functions. In some embodiments of the disclosure, the mobile station 100 is not a general purpose computing device like a portable, laptop or tablet computer, but rather is a special-purpose communications device such as a mobile phone, wireless handset, pager, or PDA. In another embodiment, the mobile station 100 may be a portable, laptop or other computing device. In still other embodiments, the mobile station 100 might be a dual mode device capable of both circuit and packet switched communications, and the network 200 might be a network capable of either or both circuit and packet switched communication.

The mobile station 100 includes a display 402. The mobile station 100 also includes a touch-sensitive surface, a keyboard or other input keys generally referred as 404 for input by a user. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The mobile station 100 may present options for the user to select, controls for the user to actuate, and/or cursors or other indicators for the user to direct. The mobile station 100 may further accept data entry from the user, including numbers to dial or various parameter values for configuring the operation of the mobile station 100. The mobile station 100 may further execute one or more software or firmware applications in response to user commands. These applications may configure the mobile station 100 to perform various customized functions in response to user interaction.

Among the various applications executable by the mobile station 100 are a web browser, which enables the display 402 to show a web page. The web page is obtained via wireless communications with a wireless network access node, a cell tower, or any other wireless communication network or system 200, which may be substantially equivalent to the network 200 of Figure 2. The network 200 is coupled to a wired network 408, such as the Internet. Via the wireless link and the wired network, the mobile station 100 has access to information on various servers, such as a server 410. The server 410 may provide content that may be shown on the display 402.

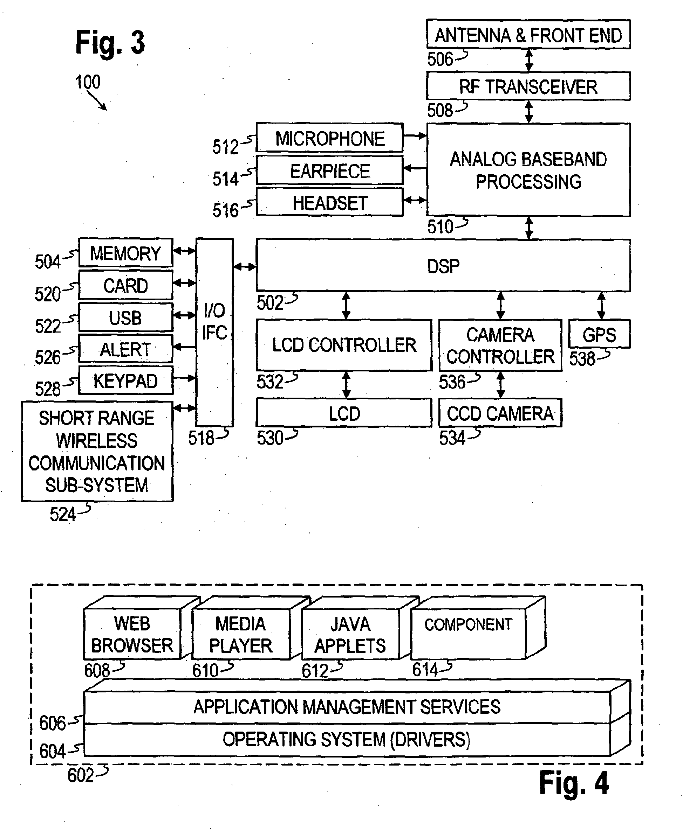

Figure 3 shows a block diagram of the mobile station 100. The mobile station 100 includes a digital signal processor (DSP) 502 and a memory 504. As shown, the mobile station 100 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, a short range wireless communication sub-system 524, an alert 526, a keypad 528, a liquid crystal display (LCD), which may include a touch sensitive surface 530, an LCD controller 532, a charge-coupled device (CCD) camera 534, a camera controller 536, and a global positioning system (GPS) sensor 538.

The DSP 502 or some other form of controller or central processing unit operates to control the various components of the mobile station 100 in accordance with embedded software or firmware stored in memory 504. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the mobile station 100 to send and receive information from a cellular network or some other available wireless communications network. The RF transceiver 508 provides frequency shifting, converting received RF signals to baseband and converting baseband transmit signals to RF. The analog baseband processing unit 510 may provide channel equalization and signal demodulation to extract information from received signals, may modulate information to create transmit signals, and may provide analog filtering for audio signals. To that end, the analog baseband processing unit 510 may have ports for connecting to the built-in microphone 512 and the earpiece speaker 514 that enable the mobile station 100 to be used as a cell phone. The analog baseband processing unit 510 may further include a port for connecting to a headset or other hands-free microphone and speaker configuration.

The DSP 502 may send and receive digital communications with a wireless network via the analog baseband processing unit 510. In some embodiments, these digital communications may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the short range wireless communication sub-system 524. The USB interface 522 may be used to charge the mobile station 100 and may also enable the mobile station 100 to function as a peripheral device to exchange information with a personal computer or other computer system. The short range wireless communication sub-system 524 may include an infrared port, a Bluetooth interface, an IEEE 802.11 compliant wireless interface, or any other short range wireless communication sub-system, which may enable the mobile station 100 to communicate wirelessly with other nearby mobile stations and/or wireless base stations.

The input/output interface 518 may further connect the DSP 502 to the alert 526 that, when triggered, causes the mobile station 100 to provide a notice to the user, for example, by ringing, playing a melody, or vibrating. The alert 526 may serve as a mechanism for alerting the user to any of various events such as an incoming call, a new text message, and an appointment reminder by silently vibrating, or by playing a specific pre-assigned melody for a particular caller.

The keypad 528 couples to the DSP 502 via the interface 518 to provide one mechanism for the user to make selections, enter information, and otherwise provide input to the mobile station 100. The keyboard 528 may be a full or reduced alphanumeric keyboard such as QWERTY, Dvorak, AZERTY and sequential types, or a traditional numeric keypad with alphabet letters associated with a telephone keypad. The input keys may include a trackwheel, an exit or escape key, a trackball, and other navigational or functional keys, which may be inwardly depressed to provide further input function. Another input mechanism may be the LCD 530, which may include touch screen capability and also display text and/or graphics to the user. The LCD controller 532 couples the DSP 502 to the LCD 530.

The CCD camera 534, if equipped, enables the mobile station 100 to take digital pictures. The DSP 502 communicates with the CCD camera 534 via the camera controller 536. The GPS sensor 538 is coupled to the DSP 502 to decode global positioning system signals, thereby enabling the mobile station 100 to determine its position. Various other peripherals may also be included to provide additional functions, e.g., radio and television reception.

Figure 4 illustrates a software environment 602 that may be implemented by the DSP 502. The DSP 502 executes operating system drivers 604 that provide a platform from which the rest of the software operates. The operating system drivers 604 provide drivers for the mobile station hardware with standardized interfaces that are accessible to application software. The operating system drivers 604 include application management services ("AMS") 606 that transfer control between applications running on the mobile station 100. Also shown in Figure 4 are a web browser application 608, a media player application 610, and Java applets 612. The web browser application 608 configures the mobile station 100 to operate as a web browser, allowing a user to enter information into forms and select links to retrieve and view web pages. The media player application 610 configures the mobile station 100 to retrieve and play audio or audiovisual media. The Java applets 612 configure the mobile station 100 to provide games, utilities, and other functionality. A component 614 might provide functionality related to classmark messages.

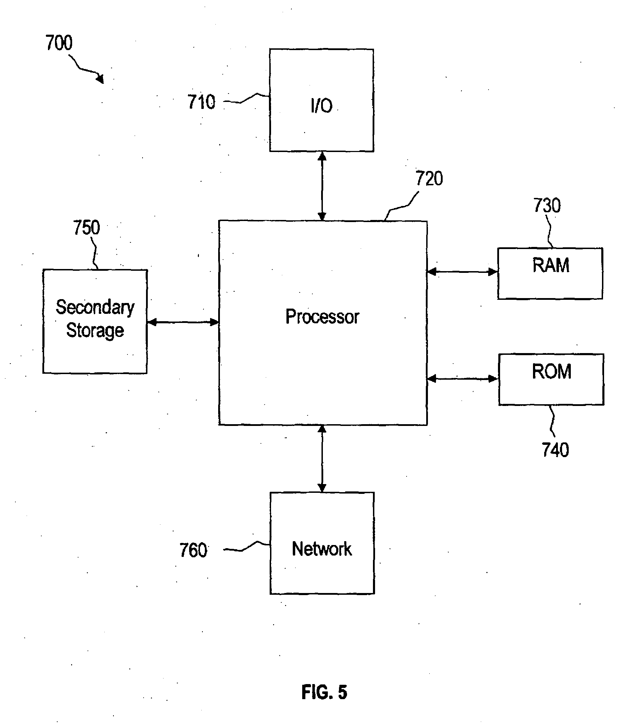

The server 410 of Figure 1 may be any general-purpose computer with sufficient processing power, memory resources, and network throughput capability to handle the necessary workload placed upon it. Figure 5 illustrates a typical, general-purpose computer system 700 that may be substantially equivalent to the server 410 of Figure 1 and that may be suitable for implementing one or more embodiments disclosed herein. The computer system 700 includes a processor 720 (which may be referred to as a central processor unit or CPU) that is in communication with memory devices including secondary storage 750, read only memory (ROM) 740, random access memory (RAM) 730, input/output (I/O) devices 710, and network connectivity devices 760. The processor may be implemented as one or more CPU chips.

The secondary storage 750 is typically comprised of one or more disk drives or tape drives and is used for non-volatile storage of data and as an overflow data storage device if RAM 730 is not large enough to hold all working data. Secondary storage 750 may be used to store programs which are loaded into RAM 730 when such programs are selected for execution. The ROM 740 is used to store instructions and perhaps data which are read during program execution. ROM 740 is a non-volatile memory device which typically has a small memory capacity relative to the larger memory capacity of secondary storage. The RAM 730 is used to store volatile data and perhaps to store instructions. Access to both ROM 740 and RAM 730 is typically faster than to secondary storage 750.

I/O devices 710 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 760 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity 760 devices may enable the processor 720 to communicate with an Internet or one or more intranets. With such a network connection, it is contemplated that the processor 720 might receive information from the network, or might output information to the network in the course of performing the above-described method steps. Such information, which is often represented as a sequence of instructions to be executed using processor 720, may be received from and outputted to the network, for example, in the form of a computer data signal embodied in a carrier wave.

Such information, which may include data or instructions to be executed using processor 720 for example, may be received from and outputted to the network, for example, in the form of a computer data baseband signal or signal embodied in a carrier wave. The baseband signal or signal embodied in the carrier wave generated by the network connectivity 760 devices may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 720 executes instructions, codes, computer programs, scripts which it accesses from hard disk, floppy disk, optical disk (these various disk based systems may all be considered secondary storage 750), ROM 740, RAM 730, or the network connectivity devices 760. A computer system similar to the computer system 700 and/or a processor similar to the processor 720 may be present in the mobile station 100 and may execute instructions related to the processing of classmark change messages.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A mobile station (100), comprising:
a processor programmed to promote sending a classmark change message (252), which informs the network of the capabilities and features of the mobile station, responsive to receiving a command from a network (250), the command requiring a capability that the mobile station does not possess, wherein the network has previously sent a system information message to the mobile station with an early classmark sending control flag disabled (242), which indicates that the mobile station does not send a classmark change message upon accessing the network, and has not previously sent a classmark enquiry message to the mobile station.

2. The mobile station of claim 1, wherein the classmark change message is similar to a classmark change message sent when the early classmark sending control flag is enabled and when the classmark enquiry message is sent from the network.

3. The mobile station of any one of claims 1 or 2, wherein the classmark change message comprises a capability of the mobile station.

4. The mobile station of any one of the preceding claims, wherein the command requires a ciphering capability that the mobile station does not possess.

5. The mobile station of any one of the preceding claim, wherein the classmark change message is recognizable by:
a Universal Mobile Telecommunications System, UMTS, Terrestrial Radio Access Network;
a Code Division Multiple Access network;
a Global System for Mobile Communications, GSM, Edge Radio Access Network; and/or
a Generic Access Network/Unlicensed Mobile Access network.

6. A method for a mobile station (100) for informing a network of the mobile station's capability, comprising:
receiving a system information message with an early classmark sending control flag disabled (242), which indicates that the mobile station does not send a classmark change message upon accessing the network, from the network;
receiving a command for performing a task that the mobile station is incapable of performing from the network (250), and
responsive to receiving the command from the network, sending a classmark change message (252), which informs the network of the capabilities and features of the mobile station, to the network to inform the network of the capability of the mobile station.

7. The method of claim 6, wherein a classmark enquiry message is not sent prior to the network commanding the mobile station to perform the task.

8. The method of claim 6 or claim 7, wherein the system information message or a system information message indication complies with:
3rd generation partnership project technical specification TS 44.018;
3rd generation partnership project technical specification TS 44.060; and/or
3rd generation partnership project technical specification TS 44.318.

9. The method of any one of claims 6 to 8, wherein the task relates to using a ciphering capability that the mobile device does not possess.

10. The method of any one of claims 6 to 9, wherein the classmark change message is similar to a classmark change message sent when the early classmark sending control flag is enabled and when the classmark enquiry message is sent.

11. The method of any one of claims 6 to 10, wherein the classmark change message is recognizable by:
a Universal Mobile Telecommunications system, UMTS, Terrestrial Radio Access Network;
a Code Division Multiple Access network;
a Global System for Mobile Communications, GSM, Edge Radio Access Network; and/or
a Generic Access Network/Unlicensed Mobile Access network.

12. A network component of a wireless network, comprising:
a processor programmed such that when the wireless network has commanded a mobile station to perform a task requiring a capability that the mobile station lacks (250), and wherein the mobile station sends a classmark change message (252), which informs the network of the capabilities and features of the mobile station, responsive to receiving the command from the wireless network for the task that the mobile station lacks the capability, the processor promotes using the classmark change message received from the mobile station to send a related command to the mobile station to perform a task requiring a different capability that the mobile station does possess, wherein the wireless network has previously sent a system information message to the mobile station with an early classmark sending control flag disabled (242), which indicates that the mobile station does not send a classmark change message upon accessing the network, and has not previously sent a classmark enquiry message to the mobile station.

13. The network component of claim 12, wherein initial task requires a ciphering algorithm that the mobile station does not possess, and wherein the classmark change message sent by the mobile station identifies ciphering algorithms that the mobile station does support, and wherein the subsequent task sent to the mobile station by the wireless network relates to one of the ciphering algorithms that the mobile station does support.

14. The network component of any one of claims 12 or 13, wherein the classmark change message sent by the mobile station is similar to classmark change messages sent when the early classmark sending control flag is enabled and when the classmark enquiry message is sent.

15. The network component of any one of claims 12 to 14, wherein the classmark change message is recognizable by:
a Universal Mobile Telecommunications System, UMTS, Terrestrial Radio Access Network;
a Code Division Multiple Access network;
a Global System for Mobile Communications, GSM, Edge Radio Access Network; and/or
a Generic Access Network/Unlicensed Mobile Access network.

16. The network component of any one of claims 12 to 15, wherein the wireless network, upon receiving the classmark change message, sends the mobile station a modified command message based on a capability specified in the classmark change message.

17. A method for a wireless communication system having a mobile station (100) and a network (200) for informing the network of the mobile station's capability, comprising:
sending a system information message with an early classmark sending control flag disabled (242), which indicates that the mobile station does not send a classmark change message upon accessing the network;
sending a command to the mobile station to perform a task that the mobile station is incapable of performing (250); and
sending a classmark change message (252), which informs the network of the capabilities and features of the mobile station, to the network from the mobile station to inform the network of the capability of the mobile station, responsive to receiving the command from the network.

18. The method of claim 17, wherein a classmark enquiry message is not sent prior to the network commanding the mobile station to perform the task.

19. The method of claim 16 or claim 17, wherein the system information message or a system information message indication complies with:
3rd generation partnership project technical specification TS 44.018;
3rd generation partnership project technical specification TS 44.060; and/or
3rd generation partnership project technical specification TS 44.318.

20. The method of any one of claims 17 to 19, wherein the task relates to using a ciphering capability that the mobile device does not possess.

21. The method of any one of claims 17 to 20, wherein the classmark change message is substantially similar to a classmark change message sent when the early classmark sending control flag is enabled and when the classmark enquiry message is sent.

22. The method of any one of claims 17 to 21, wherein the classmark change message is recognizable by:
a Universal Mobile Telecommunications System, UMTS, Terrestrial Radio Access Network;
a Code Division Multiple Access network;
a Global System for Mobile Communications, GSM, Edge Radio Access Network; and
a Generic Access Network/Unlicensed Mobile Access network.

23. The method of any one of claims 17 to 22, wherein the network uses the classmark change message received from the mobile station to determine the capabilities of the mobile station.

24. A computer readable medium storing program code for causing a mobile station to perform the steps of the method of any one of claims 6 to 11.

25. A computer readable medium storing program code for causing a computing device in a communications system to perform the steps of the method of any one of claims 17 to 23.

## Patentansprüche

1. Mobile Station (100), die aufweist:
einen Prozessor, der programmiert ist zum Fördern eines Sendens einer Classmark-Änderungs-Nachricht (252), die das Netzwerk über die Fähigkeiten und Merkmale der mobilen Station informiert, in Reaktion auf ein Empfangen eines Befehls von einem Netzwerk (250), wobei der Befehl eine Fähigkeit erfordert, die die mobile Station nicht besitzt, wobei das Netzwerk vorher eine Systeminformationsnachricht an die mobile Station gesendet hat mit einem "frühzeitige Classmark-Sende-Steuerung (early classmark sending control)"-Flag deaktiviert (242), das anzeigt, dass die mobile Station bei einem Zugreifen auf das Netzwerk keine Classmark-Änderungs-Nachricht sendet, und vorher keine Classmark-Anfrage-Nachricht an die mobile Station gesendet hat.

2. Mobile Station gemäß Anspruch 1, wobei die Classmark-Änderungs-Nachricht ähnlich ist zu einer Classmark-Änderungs-Nachricht, die gesendet wird, wenn das "frühzeitige Classmark-Sende-Steuerungs"-Flag aktiviert ist und wenn die Classmark-Anfrage-Nachricht von dem Netzwerk gesendet wird.

3. Mobile Station gemäß einem der Ansprüche 1 oder 2, wobei die Classmark-Änderungs-Nachricht eine Fähigkeit der mobilen Station aufweist.

4. Mobile Station gemäß einem der vorhergehenden Ansprüche, wobei der Befehl eine Verschlüsselungsfähigkeit erfordert, die die mobile Station nicht besitzt.

5. Mobile Station gemäß einem der vorhergehenden Ansprüche, wobei die Classmark-Änderungs-Nachricht erkennbar ist durch:
ein terrestrisches UMTS(Universal Mobile Telecommunications System)-Funkzugangsnetzwerk;
ein CDMA(Code Division Multiple Access)-Netzwerk;
ein GSM(Global System for Mobile Communications)-Edge-Funkzugangsnetzwerk; und/oder
ein GAN(Generic Access Network)/UMA(Unlicensed Mobile Access)-Netzwerk.

6. Verfahren für eine mobile Station (100) zum Informieren eines Netzwerks über die Fähigkeit der mobilen Station, das aufweist:
Empfangen einer Systeminformationsnachricht von dem Netzwerk mit einem "frühzeitige Classmark-Sende-Steuerung (early classmark sending control)"-Flag deaktiviert (242), das anzeigt, dass die mobile Station bei einem Zugreifen auf das Netzwerk keine Classmark-Änderungs-Nachricht sendet;
Empfangen eines Befehls von dem Netzwerk (250) zum Durchführen einer Aufgabe, die die mobile Station nicht durchführen kann; und
in Reaktion auf das Empfangen des Befehls von dem Netzwerk, Senden an das Netzwerk einer Classmark-Änderungs-Nachricht (252), die das Netzwerk über die Fähigkeiten und Merkmale der mobilen Station informiert, um das Netzwerk über die Fähigkeit der mobilen Station zu informieren.

7. Verfahren gemäß Anspruch 6, wobei eine Classmark-Anfrage-Nachricht nicht gesendet wird, bevor das Netzwerk die mobile Station zur Durchführung der Aufgabe anweist.

8. Verfahren gemäß Anspruch 6 oder Anspruch 7, wobei die Systeminformationsnachricht oder eine Systeminformationsnachricht-Anzeige entspricht einer:
3rd Generation Partnership Project Technical Specification TS 44.018;
3rd Generation Partnership Project Technical Specification TS 44.060; und/oder
3rd Generation Partnership Project Technical Specification TS 44.318.

9. Verfahren gemäß einem der Ansprüche 6 bis 8, wobei die Aufgabe ein Verwenden einer Verschlüsselungsfähigkeit betrifft, die die mobile Vorrichtung nicht besitzt.

10. Verfahren gemäß einem der Ansprüche 6 bis 9, wobei die Classmark-Änderungs-Nachricht ähnlich ist zu einer Classmark-Änderungs-Nachricht, die gesendet wird, wenn das "frühzeitige Classmark-Sende-Steuerungs"-Flag aktiviert ist und wenn die Classmark-Anfrage-Nachricht gesendet wird.

11. Verfahren gemäß einem der Ansprüche 6 bis 10, wobei die Classmark-Änderungs-Nachricht erkennbar ist durch:
ein terrestrisches UMTS(Universal Mobile Telecommunications System)-Funkzugangsnetzwerk;
ein CDMA(Code Division Multiple Access)-Netzwerk;
ein GSM(Global System for Mobile Communications)-Edge-Funkzugangsnetzwerk; und/oder
ein GAN(Generic Access Network)/UMA(Unlicensed Mobile Access)-Netzwerk.

12. Netzwerkkomponente eines drahtlosen Netzwerks, die aufweist:
einen Prozessor, der derart programmiert ist, dass, wenn das drahtlose Netzwerk eine mobile Station angewiesen hat, eine Aufgabe durchzuführen, die eine Fähigkeit erfordert, die der mobilen Station fehlt (250), und wobei die mobile Station eine Classmark-Änderungs-Nachricht sendet (252), die das Netzwerk über die Fähigkeiten und Merkmale der mobilen Station informiert, in Reaktion auf ein Empfangen des Befehls von dem drahtlosen Netzwerk für die Aufgabe, für die der mobilen Station die Fähigkeit fehlt, der Prozessor ein Verwenden der Classmark-Änderungs-Nachricht fördert, die von der mobilen Station empfangen wird, um einen verwandten Befehl an die mobile Station zu senden zum Durchführen einer Aufgabe, die eine andere Fähigkeit erfordert, die die mobile Station besitzt, wobei das drahtlose Netzwerk vorher eine Systeminformationsnachricht an die mobile Station gesendet hat mit einem "frühzeitige Classmark-Sende-Steuerung (early classmark sending control)"-Flag deaktiviert (242), das anzeigt, dass die mobile Station bei einem Zugreifen auf das Netzwerk keine Classmark-Änderungs-Nachricht sendet, und vorher keine Classmark-Anfrage-Nachricht an die mobile Station gesendet hat.

13. Netzwerkkomponente gemäß Anspruch 12, wobei die anfängliche Aufgabe einen Verschlüsselungsalgorithmus erfordert, den die mobile Station nicht besitzt, und wobei die Classmark-Änderungs-Nachricht, die von der mobilen Station gesendet wird, Verschlüsselungsalgorithmen identifiziert, die die mobile Station unterstützt, und wobei die nachfolgende Aufgabe, die von dem drahtlosen Netzwerk an die mobile Station gesendet wird, einen der Verschlüsselungsalgorithmen betrifft, die die mobile Station unterstützt.

14. Netzwerkkomponente gemäß einem der Ansprüche 12 oder 13, wobei die Classmark-Änderungs-Nachricht, die von der mobilen Station gesendet wird, ähnlich ist zu Classmark-Änderungs-Nachrichten, die gesendet werden, wenn das "frühzeitige Classmark-Sende-Steuerungs"-Flag aktiviert ist und wenn die Classmark-Anfrage-Nachricht gesendet wird.

15. Netzwerkkomponente gemäß einem der Ansprüche 12 bis 14, wobei die Classmark-Änderungs-Nachricht erkennbar ist durch:
ein terrestrisches UMTS(Universal Mobile Telecommunications System)-Funkzugangsnetzwerk;
ein CDMA(Code Division Multiple Access)-Netzwerk;
ein GSM(Global System for Mobile Communications)-Edge-Funkzugangsnetzwerk; und/oder
ein GAN(Generic Access Network)/UMA(Unlicensed Mobile Access)-Netzwerk.

16. Netzwerkkomponente gemäß einem der Ansprüche 12 bis 15, wobei das drahtlose Netzwerk, bei Empfang der Classmark-Änderungs-Nachricht, der mobilen Station eine modifizierte Befehlsnachricht sendet basierend auf einer Fähigkeit, die in der Classmark-Änderungs-Nachricht spezifiziert wird.

17. Verfahren für ein mobiles Kommunikationssystem, das eine mobile Station (100) hat und ein Netzwerk (200), zum Informieren des Netzwerks über die Fähigkeit der mobilen Station, das aufweist:
Senden einer Systeminformationsnachricht mit einem "frühzeitige Classmark-Sende-Steuerung (early classmark sending control)"-Flag deaktiviert (242), das anzeigt, dass die mobile Station bei einem Zugreifen auf das Netzwerk keine Classmark-Änderungs-Nachricht sendet;
Senden eines Befehls an die mobile Station zum Durchführen einer Aufgabe, die die mobile Station nicht durchführen kann (250); und
Senden einer Classmark-Änderungs-Nachricht (252) an das Netzwerk von der mobilen Station, die das Netzwerk über die Fähigkeiten und Merkmale der mobilen Station informiert, um das Netzwerk über die Fähigkeit der mobilen Station zu informieren, in Reaktion auf einen Empfang des Befehls von dem Netzwerk.

18. Verfahren gemäß Anspruch 17, wobei eine Classmark-Anfrage-Nachricht nicht gesendet wird, bevor das Netzwerk die mobile Station zur Durchführung der Aufgabe anweist.

19. Verfahren gemäß Anspruch 16 oder Anspruch 17, wobei die Systeminformationsnachricht oder eine Systeminformationsnachricht-Anzeige entspricht einer:
3rd Generation Partnership Project Technical Specification TS 44.018;
3rd Generation Partnership Project Technical Specification TS 44.060; und/oder
3rd Generation Partnership Project Technical Specification TS 44.318.

20. Verfahren gemäß einem der Ansprüche 17 bis 19, wobei die Aufgabe ein Verwenden einer Verschlüsselungsfähigkeit betrifft, die die mobile Vorrichtung nicht besitzt.

21. Verfahren gemäß einem der Ansprüche 17 bis 20, wobei die Classmark-Änderungs-Nachricht im Wesentlichen ähnlich ist zu einer Classmark-Änderungs-Nachricht, die gesendet wird, wenn das "frühzeitige Classmark-Sende-Steuerungs"-Flag aktiviert ist und wenn die Classmark-Anfrage-Nachricht gesendet wird.

22. Verfahren gemäß einem der Ansprüche 17 bis 21, wobei die Classmark-Änderungs-Nachricht erkennbar ist durch:
ein terrestrisches UMTS(Universal Mobile Telecommunications System)-Funkzugangsnetzwerk;
ein CDMA(Code Division Multiple Access)-Netzwerk;
ein GSM(Global System for Mobile Communications)-Edge-Funkzugangsnetzwerk; und/oder
ein GAN(Generic Access Network)/UMA(Unlicensed Mobile Access)-Netzwerk.

23. Verfahren gemäß einem der Ansprüche 17 bis 22, wobei das Netzwerk die Classmark-Änderungs-Nachricht, die von der mobilen Station empfangen wird, verwendet zum Bestimmen der Fähigkeiten der mobilen Station.

24. Computerlesbares Medium, das Programmcode speichert, um eine mobile Station zu veranlassen, die Schritte des Verfahrens gemäß einem der Ansprüche 6 bis 11 durchzuführen.

25. Computerlesbares Medium, das Programmcode speichert, um eine Computervorrichtung in einem Kommunikationssystem zu veranlassen, die Schritte des Verfahrens gemäß einem der Ansprüche 17 bis 23 durchzuführen.

## Revendications

1. Station mobile (100) comprenant :
un processeur programmé pour faciliter l'envoi d'un message (252) de changement de classe de service qui informe le réseau des capacités et des caractéristiques de la station mobile, en réponse à la réception d'une commande provenant d'un réseau (250), la commande nécessitant une capacité que la station mobile ne possède pas, où le réseau a envoyé au préalable un message d'information système à la station mobile avec un drapeau de commande d'envoi de classe de service précoce (242) désactivé, qui indique que la station mobile n'envoie pas de message de changement de classe de service au moment de l'accès au réseau, et n'a pas envoyé au préalable de message d'interrogation de classe de service à la station mobile.

2. Station mobile de la revendication 1, dans laquelle le message de changement de classe de service est similaire à un message de changement de classe de service envoyé lorsque le drapeau de commande d'envoi de classe de service précoce est activé et lorsque le message d'interrogation de classe de service est envoyé à partir du réseau.

3. Station mobile de l'une quelconque des revendications 1 et 2, dans laquelle le message de changement de classe de service comprend une capacité de la station mobile.

4. Station mobile de l'une quelconque des revendications précédentes, dans laquelle la commande nécessite une capacité de chiffrement que la station mobile ne possède pas.

5. Station mobile de l'une quelconque des revendications précédentes, dans laquelle le message de changement de classe de service est reconnaissable par :
un Réseau Terrestre d'Accès Radio du Système Universel de Télécommunications Mobiles, dit 'UMTS' ;
un réseau d'accès multiple par répartition en code ;
un réseau d'accès radio de GSM à débit amélioré d'un système mondial de communication avec les mobiles, dit 'GSM' ;
et/ou
un réseau d'accès mobile sans licence/réseau d'accès générique.

6. Procédé pour une station mobile (100) destiné à informer un réseau de la capacité de la station mobile, comprenant le fait :
de recevoir un message d'information système avec un drapeau de commande d'envoi de classe de service précoce (242) désactivé, qui indique que la station mobile n'envoie pas de message de changement de classe de service au moment de l'accès au réseau, provenant du réseau ;
de recevoir du réseau (250) une commande d'exécution d'une tâche que la station mobile ne peut pas exécuter, et
en réponse à la réception de la commande du réseau, d'envoyer un message (252) de changement de classe de service, informant le réseau des capacités et des caractéristiques de la station mobile, au réseau pour l'informer de la capacité de la station mobile.

7. Procédé de la revendication 6, dans lequel un message d'interrogation de classe de service n'est pas envoyé tant que le réseau n'a pas demandé à la station mobile d'exécuter la tâche.

8. Procédé de la revendication 6 ou de la revendication 7, dans lequel le message d'information système ou une indication du message d'information système est conforme à :
la spécification technique TS 44.018 de projet de partenariat de 3ème génération ;
la spécification technique TS 44.060 de projet de partenariat de 3ème génération ; et/ou
la spécification technique TS 44.318 de projet de partenariat de 3ème génération.

9. Procédé de l'une quelconque des revendications 6 à 8, dans lequel la tâche se rapporte à l'utilisation d'une capacité de chiffrement que le dispositif mobile ne possède pas.

10. Procédé de l'une quelconque des revendications 6 à 9, dans lequel le message de changement de classe de service est similaire à un message de changement de classe de service envoyé lorsque le drapeau de commande d'envoi de classe de service précoce est activé et lorsque le message d'interrogation de classe de service est envoyé.

11. Procédé de l'une quelconque des revendications 6 à 10, dans lequel le message de changement de classe de service est reconnaissable par :
un Réseau Terrestre d'Accès Radio du Système Universel de Télécommunications Mobiles, dit 'UMTS' ;
un réseau d'accès multiple par répartition en code ;
un réseau d'accès radio de GSM à débit amélioré d'un système mondial de communication avec les mobiles, dit 'GSM' ;
et/ou
un réseau d'accès mobile sans licence/réseau d'accès générique.

12. Composant de réseau d'un réseau sans fil, comprenant :
un processeur programmé pour que, lorsque le réseau sans fil aura demandé à une station mobile d'exécuter une tâche nécessitant une capacité dont la station mobile ne dispose pas (250), et où la station mobile envoie un message (252) de changement de classe de service, informant le réseau des capacités et des caractéristiques de la station mobile, en réponse à la réception de la commande provenant du réseau sans fil pour la tâche que la station mobile n'a pas la capacité d'exécuter, le processeur favorise l'utilisation du message de changement de classe de service reçu depuis la station mobile pour envoyer une commande connexe à la station mobile pour qu'elle exécute une tâche nécessitant une capacité différente que la station mobile ne possède pas, où le réseau sans fil aura envoyé au préalable un message d'information système à la station mobile avec un drapeau de commande d'envoi de classe de service précoce (242) désactivé, qui indique que la station mobile n'envoie pas de message de changement de classe de service au moment de l'accès au réseau, et n'a pas envoyé au préalable de message d'interrogation de classe de service à la station mobile.

13. Composant de réseau de la revendication 12, dans lequel la tâche initiale nécessite un algorithme de chiffrement que la station mobile ne possède pas, et où le message de changement de classe de service envoyé par la station mobile identifie des algorithmes de chiffrement que la station mobile ne supporte pas, et où la tâche suivante envoyée à la station mobile par le réseau sans fil se rapporte à l'un des algorithmes de chiffrement que la station mobile ne supporte pas.

14. Composant de réseau de l'une quelconque des revendications 12 et 13, dans lequel le message de changement de classe de service envoyé par la station mobile est similaire aux messages de changement de classe de service envoyés lorsque le drapeau de commande d'envoi de classe de service précoce est activé et lorsque le message d'interrogation de classe de service est envoyé.

15. Composant de réseau de l'une des revendications 12 à 14, dans lequel le message de changement de classe de service est reconnaissable par :
un Réseau Terrestre d'Accès Radio du Système Universel de Télécommunications Mobiles, dit 'UMTS' ;
un réseau d'accès multiple par répartition en code ;
un réseau d'accès radio de GSM à débit amélioré d'un système mondial de communication avec les mobiles, dit 'GSM' ;
et/ou
un réseau d'accès mobile sans licence/réseau d'accès générique.

16. Composant de réseau de l'une quelconque des revendications 12 à 15, dans lequel le réseau sans fil, lors de la réception du message de changement de classe de service, envoie à la station mobile un message de commande modifié sur la base d'une capacité spécifiée dans le message de changement de classe de service.

17. Procédé pour un système de communication sans fil ayant une station mobile (100) et un réseau (200) pour informer le réseau de la capacité de la station mobile, comprenant le fait :
d'envoyer un message d'information système avec un drapeau de commande d'envoi de classe de service précoce (242) désactivé, qui indique que la station mobile n'envoie pas de message de changement de classe de service au moment de l'accès au réseau ;
d'envoyer une commande à la station mobile pour lui demander d'exécuter une tâche que la station mobile ne peut exécuter (250) ; et
d'envoyer un message (252) de changement de classe de service, informant le réseau des capacités et des caractéristiques de la station mobile, au réseau depuis la station mobile pour informer le réseau de la capacité de la station mobile, en réponse à la réception de la commande provenant du réseau.

18. Procédé de la revendication 17, dans lequel un message d'interrogation de classe de service n'est pas envoyé tant que le réseau n'a pas demandé à la station mobile d'exécuter la tâche.

19. Procédé de la revendication 16 ou de la revendication 17, dans lequel le message d'information système ou une indication du message d'information système est conforme à :
la spécification technique TS 44.018 de projet de partenariat de 3ème génération ;
la spécification technique TS 44.060 de projet de partenariat de 3ème génération ; et/ou
la spécification technique TS 44.318 de projet de partenariat de 3ème génération.

20. Procédé de l'une quelconque des revendications 17 à 19, dans lequel la tâche se rapporte à l'utilisation d'une capacité de chiffrement que le dispositif mobile ne possède pas.

21. Procédé de l'une quelconque des revendications 17 à 20, dans lequel le message de changement de classe de service est sensiblement similaire à un message de changement de classe de service envoyé lorsque le drapeau de commande d'envoi de classe de service précoce est activé et lorsque le message d'interrogation de classe de service est envoyé.

22. Procédé de l'une quelconque des revendications 17 à 21, dans lequel le message de changement de classe de service est reconnaissable par :
un Réseau Terrestre d'Accès Radio du Système Universel de Télécommunications Mobiles, dit 'UMTS' ;
un réseau d'accès multiple par répartition en code ;
un réseau d'accès radio de GSM à débit amélioré d'un système mondial de communication avec les mobiles, dit 'GSM' ;
et/ou
un réseau d'accès mobile sans licence/réseau d'accès générique.

23. Procédé de l'une quelconque des revendications 17 à 22, dans lequel le réseau utilise le message de changement de classe de service reçu de la station mobile pour déterminer les capacités de la station mobile.

24. Support lisible par ordinateur stockant un code de programme destiné à amener une station mobile à exécuter les étapes du procédé de l'une quelconque des revendications 6 à 11.

25. Support lisible par ordinateur stockant un code de programme destiné à amener un dispositif de calcul dans un système de communication à exécuter les étapes du procédé de l'une quelconque des revendications 17 à 23.
